# EUROPÄISCHE PATENTSCHRIFT

(11) **EP 3 365 540 B1**
(45) Veröffentlichungstag und Bekanntmachung des Hinweises auf die Patenterteilung: **17.07.2019**
(21) Anmeldenummer: 16781285.8
(22) Anmeldetag: 06.10.2016
(51) Int. Cl.: F01N 3/20, F01N 3/28, F01N 13/00, F01N 13/18

(54) **ABGASNACHBEHANDLUNGSSYSTEM UND BRENNKRAFTMASCHINE MIT ABGASNACHBEHANDLUNGSSYSTEM**
EXHAUST GAS PURIFICATION SYSTEM AND INTERNAL COMBUSTION ENGINE WITH EXHAUST GAS PURIFICATION SYSTEM
SYSTÈME DE PURIFICATION DE GAZ D'ÉCHAPPEMENT ET MOTEUR À COMUSTION INTERNE AVEC SYSTÈME DE PURIFICATION DE GAZ D'ÉCHAPPEMENT

(30) Priorität: 21.10.2015 DE 102015220532
(43) Veröffentlichungstag der Anmeldung: 29.08.2018
(73) Patentinhaber: MTU Friedrichshafen GmbH, 88045 Friedrichshafen (DE)
(72) Erfinder: BAUKNECHT, Mathias, 88069 Tettnang (DE); ENGELHARDT, Michael, 88299 Leutkirch (DE); MALETIC, Boban, 88046 Friedrichshafen (DE); VOGEL, Samuel, 88339 Bad Waldsee (DE)
(74) Vertreter: Kordel, Mattias
(86) Internationale Anmeldenummer: PCT/EP2016/001656
(87) Internationale Veröffentlichungsnummer: WO 2017/067636

(56) Entgegenhaltungen:
- WO-A1-92/02715
- WO-A1-2013/188728
- DE-A1-102005 021 194
- DE-A1-102010 027 293
- DE-A1-102013 015 602
- DE-A1-102014 005 303
- JP-A- 2012 067 635
- US-B1- 8 747 788

## Beschreibung

Die Erfindung betrifft ein Abgasnachbehandlungssystem und eine Brennkraftmaschine mit einem solchen Abgasnachbehandlungssystem.

Bei Abgasnachbehandlungssystemen ist es grundsätzlich bekannt, Abgas durch einen Abgaseintritt in eine Strömungsleitkammer zu führen, von welcher aus das Abgas wenigstens ein Abgasnachbehandlungselement anströmt. Es ist möglich, dass das Abgas in der Strömungsleitkammer zwei oder mehr parallel zueinander orientierte Abgasnachbehandlungselemente in einer bestimmten Strömungsrichtung anströmt und durchsetzt. Soll ein aktives Volumen der Abgasnachbehandlungselemente, insbesondere ein Katalysatorvolumen, vergrößert werden, ist es bei diesem Konzept nötig, die Baulänge der Abgasnachbehandlungselemente zu verlängern. Hierdurch steigt jedoch ein Druckverlust über den Abgasnachbehandlungselementen, was ungünstig für den Betrieb einer Brennkraftmaschine ist, welche das Abgasnachbehandlungssystem aufweist.

Aus DE 10 2005 021 194 A1 geht ein Abgasnachbehandlungssystem gemäß dem Oberbegriff des Anspruchs 1 hervor. Weitere Abgasnachbehandlungssysteme sind auch aus DE 10 2013 015 602 A1, DE 10 2014 005 303 A1, WO 2013/188728 A1, JP 2012 067635 A, US 8,747,788 B1, und WO 92/02715 A1 bekannt.

Der Erfindung liegt die Aufgabe zugrunde, ein Abgasnachbehandlungssystem und eine Brennkraftmaschine zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Abgasnachbehandlungssystem geschaffen wird, welches einen Abgaseintritt und wenigstens zwei Abgasnachbehandlungselemente sowie eine Strömungsleitkammer aufweist. Das Abgasnachbehandlungssystem zeichnet sich dadurch aus, dass der Abgaseintritt, die wenigstens zwei Abgasnachbehandlungselemente und die Strömungsleitkammer so relativ zueinander angeordnet und miteinander fluidverbunden sind, dass durch den Abgaseintritt in die Strömungsleitkammer strömendes Abgas auf die wenigstens zwei Abgasnachbehandlungselemente aufteilbar ist, wobei das Abgas wenigstens ein erstes der wenigstens zwei Abgasnachbehandlungselemente entlang einer ersten Strömungsrichtung durchsetzt, wobei es wenigstens ein zweites der wenigstens zwei Abgasnachbehandlungselemente entlang einer zweiten Strömungsrichtung durchsetzt, wobei die erste Strömungsrichtung und die zweite Strömungsrichtung wenigstens schräg zueinander, vorzugsweise antiparallel zueinander, orientiert sind. Dies bedeutet insbesondere, dass zwei die Strömungsrichtungen angebende Vektoren zueinander einen Winkel von mehr als 0°, vorzugsweise mindestens 90° aufweisen, wobei sie besonders bevorzugt entgegengesetzt zueinander orientiert sind, insbesondere also einen Winkel von 180° miteinander einschließen. Hierdurch ist es möglich, das in die Strömungsleitkammer strömende Abgas durch die wenigstens zwei Abgasnachbehandlungselemente in verschiedene Richtungen strömen zu lassen, wobei insbesondere das insgesamt zur Verfügung stehende, aktive Volumen der Abgasnachbehandlungselemente, insbesondere ein Katalysatorvolumen, auf zwei verschiedene Strömungspfade entlang der beiden Strömungsrichtungen aufgeteilt ist. Hierdurch kann das Katalysatorvolumen vorteilhaft erhöht werden, ohne dass deswegen die Baulänge eines einzelnen Abgasnachbehandlungselements verlängert und damit der Druckverlust erhöht werden muss. Vielmehr kann in vorteilhafter Weise eine große Anströmfläche, insbesondere eine in Hinblick auf eine konventionelle Ausgestaltung verdoppelte Anströmfläche, bereitgestellt werden, ohne dass eine Erhöhung des Druckverlusts in dem Abgasnachbehandlungssystem eintritt. Bevorzugt ist sogar eine Reduktion des Druckverlusts durch die vergrößerte Anströmfläche möglich. Vorzugsweise kann die Hälfte des Abgasmassenstroms durch das Abgasnachbehandlungssystem in eine der ersten Strömungsrichtung entgegengesetzte, zweite Strömungsrichtung umgeleitet werden, ohne dass sich große Unterschiede in der Massenstromgleichverteilung bezogen auf die Aufteilung von Strömungsrichtung und Strömungsgegenrichtung ergeben. Bei einer Ausgestaltung von wenigstens einem Abgasnachbehandlungselement als Katalysator zur selektiven katalytischen Reduktion von Stickoxiden stellt sich auch eine Gleichverteilung von Massenstrom und Reduktionsmittel über die Katalysatorfläche gut dar.

Bei einem bevorzugten Ausführungsbeispiel ist vorgesehen, dass das Abgasnachbehandlungssystem mehr als zwei Abgasnachbehandlungselemente aufweist. Insbesondere ist das Abgasnachbehandlungssystem in Bezug auf die Anzahl der von ihm umfassten Abgasnachbehandlungselemente vorzugsweise skalierbar, insbesondere auf eine Größe oder Nennleistung einer Brennkraftmaschine, mit welcher das Abgasnachbehandlungssystem betrieben wird, abstimmbar.

Es wird besonders ein Ausführungsbeispiel des Abgasnachbehandlungssystems bevorzugt, bei welchem acht Abgasnachbehandlungselemente derart paarweise vorgesehen sind, dass jeweils vier Abgasnachbehandlungselemente entlang der ersten Strömungsrichtung und vier andere Abgasnachbehandlungselemente entlang der zweiten Strömungsrichtung von Abgas durchsetzt werden. Dabei sind besonders bevorzugt jeweils zwei Abgasnachbehandlungselemente einander paarweise gegenüberliegend angeordnet.

Gemäß einer Weiterbildung der Erfindung ist vorgesehen, dass die wenigstens zwei Abgasnachbehandlungselemente jeweils einen der Strömungsleitkammer zugewandten Abgaseinlass aufweisen, wobei ein erster Abgaseinlass des ersten Abgasnachbehandlungselements auf einer ersten Seite der Strömungsleitkammer angeordnet ist, und wobei ein zweiter Abgaseinlass des zweiten Abgasnachbehandlungselements der wenigstens zwei Abgasnachbehandlungselemente auf einer zweiten, der ersten Seite gegenüberliegenden Seite der Strömungsleitkammer angeordnet ist. Die Strömungsleitkammer weist also zwei Seiten oder zwei Enden auf, wobei der erste Abgaseinlass des ersten Abgasnachbehandlungselements der wenigstens zwei Abgasnachbehandlungselemente im Bereich des ersten Endes der Strömungsleitkammer angeordnet ist, und wobei der zweite Abgaseinlass des zweiten Abgasnachbehandlungselements der wenigstens zwei Abgasnachbehandlungselemente im Bereich des zweiten, gegenüberliegenden Endes der Strömungsleitkammer angeordnet ist. Die beiden Abgasnachbehandlungselemente sind also bezüglich ihrer Abgaseinlässe einander gegenüberliegend angeordnet, sodass die Abgasströmung auf diese in antiparallele beziehungsweise entgegengesetzt orientierte Strömungsrichtungen aufteilbar ist.

Vorzugsweise ist vorgesehen, dass die Abgasnachbehandlungselemente jeweils mit ihren Abgaseinlässen in die Strömungsleitkammer münden. Insgesamt wird mit dieser Ausgestaltung eine geometrisch einfache und kostengünstig fertigbare Ausführung des Abgasnachbehandlungssystems bereitgestellt, bei welcher die Abgasströmung auf die wenigstens zwei Abgasnachbehandlungselement antiparallel aufteilbar ist.

Der Abgaseintritt ist bevorzugt mit der Strömungsleitkammer über ein Abgasleitrohr in Fluidverbindung. Vorzugsweise ist das Abgasleitrohr als Misch- und/oder Aufbereitungsstrecke für die Durchmischung und/oder Aufbereitung eines Reaktionsmittels zur Umsetzung an einem Katalysator, insbesondere eines Reduktionsmittels oder eines Reduktionsmittelvorläuferprodukts, beispielsweise einer Harnstoff-Lösung, eingerichtet. Auf diese Weise wird insbesondere eine integrierte Misch-/Aufbereitungsstrecke bereitgestellt, was eine möglichst hohe Temperatur bei der Aufbereitung des Reaktionsmittels ermöglicht.

Erfindungsgemäß ist vorgesehen, dass das Abgasnachbehandlungssystem einen Abgasnachbehandlungsgehälter aufweist, wobei der Abgasnachbehandlungsbehälter den Abgaseintritt, die wenigstens zwei Abgasnachbehandlungselemente und die Strömungsleitkammer aufweist. Der Abgasnachbehandlungsbehälter ist vorzugsweise als Abgasbox oder Gasbox ausgebildet und stellt ein geschlossenes, durchströmbares Gefäß mit dem Abgaseintritt und wenigstens einem Abgasaustritt dar, wobei Abgas durch den Abgaseintritt in den Abgasnachbehandlungsbehälter einströmen, diesen entlang eines bestimmten Strömungspfades, entlang dessen es wenigstens ein Abgasnachbehandlungselement passiert, zu dem wenigstens einen Abgasaustritt strömen und dort den Abgasnachbehandlungsbehälter wieder verlassen kann. Der Abgasnachbehandlungsbehälter stellt eine konstruktiv einfache, integrale Ausgestaltung des Abgasnachbehandlungssystems dar, wobei dieses insbesondere in günstiger und kompakter, bauraumsparender Weise im Bereich einer Brennkraftmaschine oder an einer Brennkraftmaschine montierbar ist.

In dem Abgasnachbehandlungsbehälter sind bevorzugt wenigstens zwei - insbesondere schräg, vorzugsweise antiparallel zueinander orientierte - Strömungspfade ausgebildet, wobei jeweils ein Strömungspfad wenigstens eines der wenigstens zwei Abgasnachbehandlungselemente umfasst. Jedem Strömungspfad ist bevorzugt eine separate Austrittskammer zugeordnet, in welche jeweils ein Abgasaustritt mündet, sodass Abgas aus der Abgasaustrittskammer über den Abgasaustritt aus dem Abgasnachbehandlungsbehälter austreten kann. Dadurch, dass jedem Strömungspfad ein eigener Abgasaustritt zugeordnet ist, kann ein Druckverlust über dem Abgasnachbehandlungssystem weiter gesenkt werden. Selbstverständlich ist es alternativ aber auch möglich, in konstruktiv einfacher und kostengünstiger Weise das aus den verschiedenen Strömungspfaden kommende Abgas in einer gemeinsamen Abgasaustrittskammer zusammenzuführen und über einen einzigen Abgasaustritt aus dem Abgasnachbehandlungsbehälter zu entlassen.

Gemäß einer Weiterbildung der Erfindung ist vorgesehen, dass die wenigstens zwei Abgasnachbehandlungselemente in wenigstens einem Wechseleinschubmodul in dem Abgasnachbehandlungsbehälter angeordnet sind. Auf diese Weise kann ein sehr einfaches und günstiges Wechselkonzept für die Abgasnachbehandlungselemente verwirklicht werden, sodass diese zum Ende einer vorbestimmten Lebensdauer oder bei übermäßiger Kontamination oder zum Zwecke der Reinigung einfach und schnell gewechselt werden können. Besonders bevorzugt weist hierzu der Abgasnachbehandlungsbehälter wenigstens ein Halterohr auf, in welchem ein Wechseleinschubmodul aufnehmbar ist. Die Wechseleinschubmodule können in für sich genommen bekannter Weise mit einem Deckel und einer V-Bandschelle, oder in anderer geeigneter Weise, an dem Halterohr und/oder an dem Abgasnachbehandlungsbehälter befestigt werden. In jedem Wechseleinschubmodul ist vorzugsweise wenigstens ein Abgasnachbehandlungselement - insbesondere mittels eines Drahtgestrickrings - gelagert.

Der Abgasnachbehandlungsbehälter weist vorzugsweise Innenwandungen auf, an welchen die Wechseleinschubmodule und/oder die Halterohre gehalten sind, wobei die Innenwandungen bevorzugt zusätzlich verschiedene Kammern des Abgasnachbehandlungsbehälters, insbesondere eine Abgaseintrittskammer, die Strömungsleitkammer und/oder die wenigstens eine Abgasaustrittskammer voneinander abgrenzen. Auf diese Weise kann eine Durchmischung von unbehandeltem Abgas mit nachbehandeltem Abgas vermieden werden.

Es ist möglich, dass in einem Wechseleinschubmodul genau zwei Abgasnachbehandlungselemente oder auch mehr als zwei Abgasnachbehandlungselemente angeordnet sind.

Erfindungsgemäß ist insbesondere vorgesehen, dass der Abgasnachbehandlungsbehälter wenigstens ein Wechseleinschubmodul aufweist, welches die wenigstens zwei - in Längsrichtung des Wechseleinschubmoduls gesehen - voneinander beabstandet angeordneten Abgasnachbehandlungselemente aufweist, wobei das Wechseleinschubmodul zwischen den Abgasnachbehandlungselementen, das heißt dort, wo diese voneinander beabstandet sind, eine bereichsweise randoffene Einströmkammer aufweist. Auf diese Weise kann die Aufteilung der Abgasströmung in baulich sehr einfacher und kompakter Weise innerhalb des Wechseleinschubmoduls erfolgen. Dabei ist die Einströmkammer in montiertem Zustand des Wechseleinschubmoduls vorzugsweise mit der Strömungsleitkammer in Fluidverbindung. Insbesondere wird das Wechseleinschubmodul vorzugsweise derart in den Abgsnachbehandlungsbehälter eingeschoben und an diesem montiert, dass die Einströmkammer in der Strömungsleitkammer angeordnet ist, wobei sich deren wenigstens ein randoffener Bereich zu der Strömungsleitkammer hin öffnet. Abgas kann dann von der Strömungsleitkammer in die Einströmkammer einströmen, und wird dort auf die beiden Abgasnachbehandlungselemente aufgeteilt, nämlich bevorzugt entlang einander entgegengesetzter Strömungsrichtungen. Bei einer solchen Ausgestaltung ist es insbesondere möglich, alle Wechseleinschubmodule des Abgasnachbehandlungssystems von genau einer Seite in den Abgasnachbehandlungsbehälter einzuführen. Es bedarf keines mehrseitigen Zugangs zu dem Abgasnachbehandlungsbehälter.

Gemäß einem nicht zur Erfindung gehörenden Beispiel ist vorgesehen, dass der Abgasnachbehandlungsbehälter wenigstens zwei Wechseleinschubmodule aufweist, wobei wenigstens ein Wechseleinschubmodul mindestens ein, vorzugsweise genau ein Abgasnachbehandlungselement - vorzugsweise ohne Einströmkammer - aufweist. Besonders bevorzugt ist dabei vorgesehen, dass zwei Wechseleinschubmodule vorgesehen sind, von denen eines das erste der wenigstens zwei Abgasnachbehandlungselemente und ein anderes das zweite der wenigstens zwei Abgasnachbehandlungselemente aufweist. Somit sind die beiden Abgasnachbehandlungselemente, die entlang der wenigstens zwei verschiedenen Strömungsrichtungen durchströmt werden, verschiedenen Wechseleinschubmodulen zugeordnet. Die beiden Wechseleinschubmodule münden bevorzugt in die Strömungsleitkammer, sodass die Abgasströmung ausgehend von der Strömungsleitkammer auf die beiden Wechseleinschubmodule und damit auf die wenigstens zwei Abgasnachbehandlungselemente - in die verschiedenen Strömungsrichtungen - aufgeteilt wird. Die Wechseleinschubmodule können dabei kürzer ausgestaltet sein, als wenn sie jeweils zwei Abgasnachbehandlungselemente und eine Einströmkammer aufweisen, was die Abdichtung der Wechseleinschubmodule vereinfacht. Außerdem kann eine Baulänge des Abgasnachbehandlungsbehälters verkürzt werden, insbesondere weil auf die Einströmkammer der Wechseleinschubmodule verzichtet werden kann.

Gemäß einer Weiterbildung der Erfindung ist vorgesehen, dass der Abgasnachbehandlungsbehälter wenigstens zwei Einschubaufnahmen für Wechseleinschubmodule an genau einer Außenwandung aufweist. Dabei ist unter einer Außenwandung insbesondere eine Wandung zu verstehen, welche ein Inneres des Abgasnachbehandlungsbehälters, in welchem Abgas strömt, von einem Äußeren des Abgasnachbehandlungsbehälters abteilt, wo vorzugsweise kein Abgas strömt. Dabei ist es allerdings auch möglich, dass der Abgasnachbehandlungselementbehälter selbst in einem größeren Behälter angeordnet ist, in dem gegebenenfalls auch Abgas strömen kann. In diesem Fall ist die Außenwandung keine Abschlusswandlung zu einer Umgebung, in der kein Abgas strömt, sondern als Außenwandung in engerem Sinne des Abgasnachbehandlungsbehälters selbst, welche die Einschubaufnahmen aufweist und damit auch zur Halterung und Befestigung der Wechseleinschubmodule dient, ausgebildet.

Weist der Abgasnachbehandlungsbehälter auf genau einer und bevorzugt nur einer Seite oder an genau einer Außenwandung solche Einschubaufnahmen auf, ist er von nur einer Seite her bestückbar, sodass insbesondere die andere Seite des Abgasnachbehandlungsbehälters unzugänglich angeordnet werden kann. Dies kann Vorteile in Hinblick auf eine Montage und/oder einen Einbau des Abgasnachbehandlungsbehälters haben.

Alternativ ist vorgesehen, dass der Abgasnachbehandlungsbehälter Einschubaufnahmen für Wechseleinschubmodule an zwei gegenüberliegenden Außenwandungen oder auf zwei gegenüberliegenden Seiten aufweist. Die Wechseleinschubmodule können dann von zwei Seiten her in den Abgasnachbehandlungsbehälter eingeschoben werden. Dieser kann dadurch in besonders günstiger Weise abgedichtet werden und/oder besonders kurz und bauraumsparend bauen.

Weist der Abgasnachbehandlungsbehälter Einbauaufnahmen für Wechseleinschubmodule an genau einer Außenwandung auf, wird dieser besonders bevorzugt mit Wechseleinschubmodulen verwendet, welche wenigstens zwei - in Längsrichtung gesehen - voneinander beabstandet angeordnete Abgasnachbehandlungselemente aufweisen, wobei sie weiterhin eine randoffene Einströmkammer zwischen den Abgasnachbehandlungselementen aufweisen. Solche Wechseleinschubmodule können ohne weiteres von nur einer Seite her in den Abgasnachbehandlungsbehälter eingeschoben werden. Weist der Abgasnachbehandlungsbehälter dagegen Einschubaufnahmen für Wechseleinschubmodule an zwei gegenüberliegenden Außenwandungen auf, wird er dagegen bevorzugt mit Wechseleinschubmodulen verwendet, denen jeweils genau ein Abgasnachbehandlungselement oder eine Mehrzahl von Abgasnachbehandlungselementen ohne dazwischen angeordnete Einströmkammer zugeordnet ist. Solche Wechseleinschubmodule können dann von verschiedenen Seiten her in den Abgasnachbehandlungsbehälter eingeschoben werden.

Die Strömungsleitkammer ist vorzugsweise zentral in dem Abgasnachbehandlungsbehälter vorgesehen, wobei insbesondere das Abgas zunächst durch den Abgaseintritt und das Abgasleitrohr mittig in die zentrale Strömungsleitkammer geführt wird, von welcher es entlang der beiden Strömungsrichtungen auf die verschiedenen Abgasnachbehandlungselemente aufgeteilt und insbesondere zu gegenüberliegenden Seiten, insbesondere Enden, des Abgasnachbehandlungsbehälters hin geführt wird.

Gemäß einer Weiterbildung der Erfindung ist vorgesehen, dass wenigstens ein Abgasnachbehandlungselement als Katalysator zur selektiven katalytischen Reduktion von Stickoxiden (SCR-Katalysator) ausgebildet ist. In diesem Fall ist dem Abgaseintritt bevorzugt eine Dosiereinrichtung für wenigstens ein Reduktionsmittel zugeordnet. Die Dosiereinrichtung kann insbesondere zur Eindosierung einer Harnstoff-Wasser-Lösung eingerichtet sein, die mit dem heißen Abgas vermischt und verdampft wird, wobei Ammoniak entsteht, welches an dem SCR-Katalysator mit Stickoxiden zu Stickstoff und Wasser umgesetzt wird. Insbesondere in diesem Fall ist das Abgasleitrohr bevorzugt als Mischstrecke und/oder als Aufbereitungsstrecke ausgebildet.

Die Dosiereinrichtung ist vorzugsweise an dem Abgaseintritt angeordnet, oder extern zu dem Abgasnachbehandlungsbehälter vorgesehen, wobei sie dann insbesondere stromaufwärts des Abgaseintritts angeordnet ist. Dadurch, dass die Dosiereinrichtung dem Abgaseintritt zugeordnet ist, wird eine Mischstrecke für das Reduktionsmittel von dem Abgaseintritt bis in die Strömungsleitkammer verwirklicht, sodass eine gute Durchmischung und Verdampfung sowie gegebenenfalls eine Umsetzung eines Reduktionsmittelvorläuferprodukts bis zu der Strömungsleitkammer gewährleistet ist. Dies erhöht die Effizienz der selektiven katalytischen Reduktion von Stickoxiden in dem wenigstens einen Abgasnachbehandlungselement.

Gemäß einer Weiterbildung der Erfindung ist vorgesehen, dass das Abgasnachbehandlungssystem eine Mischkammer aufweist, die außerhalb des Abgasnachbehandlungsbehälters stromaufwärts des Abgaseintritts angeordnet ist, wobei die Mischkammer mit dem Abgaseintritt in Fluidverbindung ist. Auf diese Weise können vorteilhaft die Funktionen einer Vermischung eines Reduktionsmittels und/oder einer Drallerzeugung für das Abgas für eine vorteilhafte Abgasströmung sowie die eigentliche Abgasnachbehandlung in dem Abgasnachbehandlungsbehälter voneinander getrennt werden, sodass der Abgasnachbehandlungsbehälter selbst in verkürzter Bauweise ausgeführt und damit bauraumsparend ausgestaltet sein kann.

Gemäß einer Ausgestaltung ist der Mischkammer bevorzugt eine Dosiereinrichtung für Reduktionsmittel zugeordnet, wobei die Mischkammer dann insbesondere zur Vermischung des Reduktionsmittels mit Abgas dient.

Alternativ oder zusätzlich ist bevorzugt vorgesehen, dass die Mischkammer eine zylindrische Form, insbesondere mit rundem, vorzugsweise mit kreisrundem Querschnitt, aufweist, wobei die Mischkammer eine tangential orientierte Abgaseinlassöffnung sowie vorzugsweise eine axial orientierte Abgasauslassöffnung aufweist. Dabei ist die tangential orientierte Abgaseinlassöffnung vorzugsweise an einem äußeren Umfang der Mischkammer angeordnet, wobei die axial orientierte Abgasauslassöffnung vorzugsweise zentral, insbesondere mittig an der Mischkammer angeordnet ist. Durch die hier beschriebene Anordnung der Abgaseinlassöffnung einerseits und der Abgasauslassöffnung andererseits ist eine Verwirbelung des Abgases in der Mischkammer und insbesondere eine kreisförmige oder spiralige Strömungsführung möglich, welche besonders günstig ist und insbesondere zu einer sehr guten Durchmischung des Abgases mit einem Reduktionsmittel führt.

Vorzugsweise weist die Mischkammer einen Durchmesser auf, der größer ist als eine Erstreckung der Mischkammer in axialer Richtung. Die Mischkammer ist also insgesamt insbesondere als Kreisscheibe ausgebildet oder weist eine oblate Form auf.

Alternativ oder zusätzlich weist die Mischkammer bevorzugt eine Drallerzeugungseinrichtung auf, die eingerichtet ist, um einen Drall in der Abgasströmung durch die Mischkammer zu erzeugen. Hierdurch kann insbesondere die Durchmischung des Abgases mit Reduktionsmittel noch weiter verbessert werden. Die Drallerzeugungseinrichtung weist vorzugsweise wenigstens ein Drallblech auf, welches in der Mischkammer derart angeordnet ist, dass dem das Drallblech anströmendem Abgas ein Drall vermittelt wird.

Gemäß einer Ausgestaltung ist vorgesehen, dass die Mischkammer für das einströmende Abgas eine sprunghafte Querschnittserweiterung im Bereich der Einlassöffnung bereitstellt. Durch diese unstetige Erweiterung des Strömungsquerschnitts kann zusätzlich die Durchmischung des Abgases mit Reduktionsmittel verbessert werden.

Zur Erfindung gehören auch konstruktive Maßnahmen, die zusätzlich oder alternativ zu den bereits beschriebenen Maßnahmen getroffen werden können, um eine Gleichverteilung des Abgasmassenstroms auf die Abgasnachbehandlungselemente zu verbessern, insbesondere zu optimieren. Solche Maßnahmen schließen wenigstens eine Maßnahme, ausgewählt aus einer Gruppe bestehend aus einer Variation von Abmessungen des Abgasleitrohrs, einer Ausführung einer Perforation für den Abgasdurchtritt, insbesondere an dem Abgasleitrohr und/oder an den Abgasnachbehandlungselementen, das Vorsehen von wenigstens einem Strömungsleitelement, insbesondere einem Kegel oder Strömungsleitblech, verschiedene Volumina für die Abgasnachbehandlungselemente und/oder die Austrittskammern, allgemein für die verschiedenen Strömungspfade, verschiedene Längen der verschiedenen Strömungspfade, und verschiedene Längen für verschiedene, verschiedenen Strömungsrichtungen zugeordnete Abgasnachbehandlungselemente, insbesondere zur Beeinflussung eines Druckverlustbeiwertkoeffizient. Insgesamt ist es also möglich, aktive Maßnahmen, insbesondere durch entsprechende Konstruktion des Abgasnachbehandlungssystems, zur Verbesserung der Abgasmassenstromgleichverteilung zu treffen.

Das Abgasnachbehandlungssystem stellt ein skalierbares Baukastensystem bereit, welches flexibel auf verschiedene Anwendungsbereiche, insbesondere auf verschiedene Brennkraftmaschinen, anpassbar ist.

Bei dem Abgasnachbehandlungssystem ist auch eine Verbesserung und/oder Integration einer Einfügeschalldämpfung möglich.

Die Aufgabe wird auch gelöst, indem eine Brennkraftmaschine geschaffen wird, welche ein Abgasnachbehandlungssystem nach einem der zuvor beschriebenen Ausführungsbeispiele aufweist. Dabei ist wenigstens ein Abgasauslass eines Motorblocks der Brennkraftmaschine, insbesondere ein Abgassammler oder Abgaskrümmer, bevorzugt mit dem Abgaseintritt des Abgasnachbehandlungssystems in Fluidverbindung. In Zusammenhang mit der Brennkraftmaschine ergeben sich die Vorteile, die bereits in Zusammenhang mit dem Abgasnachbehandlungssystem erläutert wurden.

Die Brennkraftmaschine ist vorzugsweise als Hubkolbenmotor ausgebildet. Es ist möglich, dass die Brennkraftmaschine zum Antrieb eines Personenkraftwagens, eines Lastkraftwagens oder eines Nutzfahrzeugs eingerichtet ist. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Erfindung wird im Folgenden anhand der Zeichnung näher erläutert. Dabei zeigen
- Figur 1: eine schematische Darstellung eines Ausführungsbeispiels einer Brennkraftmaschine mit einem Abgasnachbehandlungssystem;
- Figur 2: eine schematische Darstellung eines nicht zur Erfindung gehörenden Beispiels eines Abgasnachbehandlungssystems, und
- Figur 3: eine weitere Darstellung des nicht zur Erfindung gehörenden Beispiels gemäß Figur 2.

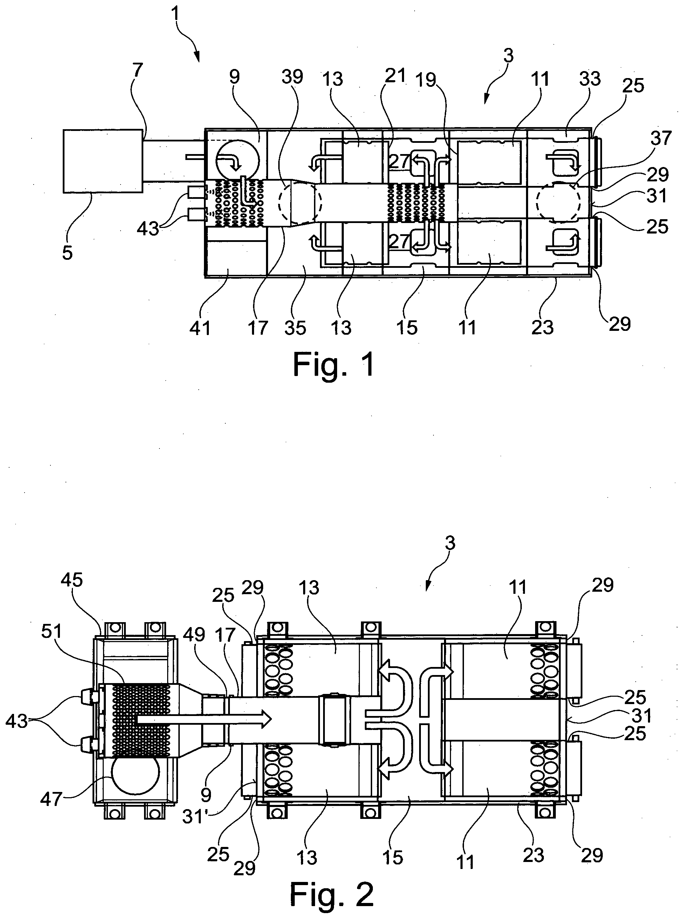

**Fig. 1** zeigt eine schematische Darstellung eines Ausführungsbeispiels einer Brennkraftmaschine 1 mit einem Abgasnachbehandlungssystem 3, wobei ein Motorblock 5 der Brennkraftmaschine 1 einen Abgasauslass 7 aufweist, der mit einem Abgaseintritt 9 des Abgasnachbehandlungssystems 3 in Fluidverbindung ist. Das Abgasnachbehandlungssystem 3 weist wenigstens zwei Abgasnachbehandlungselemente 11, 13 auf, wobei das hier dargestellte Ausführungsbeispiel insgesamt acht Abgasnachbehandlungselemente 11, 13 aufweist, von denen in der in Figur 1 dargestellten Längsschnittansicht nur vier dargestellt sind. Von diesen wird wiederum im Folgenden nur auf zwei Abgasnachbehandlungselemente 11, 13 näher eingegangen, weil sich für alle anderen Abgasnachbehandlungselemente 11, 13 genau die gleiche Funktionsweise ergibt und insoweit nur eine Vervielfachung des Konzepts und der Funktionsweise des Abgasnachbehandlungssystems 3 gegeben ist.

Das Abgasnachbehandlungssystem 3 weist außerdem eine Strömungsleitkammer 15 auf.

Der Abgaseintritt 9, die wenigstens zwei Abgasnachbehandlungselemente 11, 13 und die Strömungsleitkammer 15 sind so relativ zueinander angeordnet und miteinander fluidverbunden, dass Abgas, welches durch den Abgaseintritt 9 in die Strömungsleitkammer 15 einströmt, auf die wenigstens zwei Abgasnachbehandlungselemente 11, 13 aufgeteilt wird, wobei das Abgas ein erstes Abgasnachbehandlungselement 11 der wenigstens zwei Abgasnachbehandlungselemente 11, 13 entlang einer ersten Strömungsrichtung - in Figur 1 von links nach rechts - durchsetzt, wobei es wenigstens ein zweites Abgasnachbehandlungselement 13 der wenigstens zwei Abgasnachbehandlungselemente 11, 13 entlang einer zweiten Strömungsrichtung - in Figur 1 von rechts nach links - durchsetzt, wobei die erste Strömungsrichtung und die zweite Strömungseinrichtung hier antiparallel, also entgegengesetzt zueinander, orientiert sind.

Das in die Strömungsleitkammer 15 einströmende Abgas wird also teilweise umgelenkt und hier entgegen der Einströmrichtung durch das zweite Abgasnachbehandlungselement 13 zurückgeführt, wobei ein anderer Teil des Abgases das erste Abgasnachbehandlungselement 11 im Wesentlichen in Einströmrichtung durchsetzt.

Durch das hier vorgeschlagene Konzept ist ein Katalysatorvolumen der Abgasnachbehandlungselemente 11, 13 vergrößerbar, insbesondere verdoppelbar, ohne dass ein Druckverlust über die Abgasnachbehandlungselemente 11, 13 zunimmt. Vielmehr wird in sehr effizienter Weise die Anströmfläche der Abgasnachbehandlungselemente 11, 13 insgesamt vergrößert, insbesondere verdoppelt.

Der Abgaseintritt 9 ist hier mit der Strömungsleitkammer 15 über ein Abgasleitrohr 17 in Fluidverbindung, wobei die Abgasnachbehandlungselemente 11, 13 jeweils einen der Strömungsleitkammer 15 zugewandten Abgaseinlass 19, 21 aufweisen, wobei ein erster Abgaseinlass 19 auf einer ersten Seite der Strömungsleitkammer 15 angeordnet ist, und wobei ein zweiter Abgaseinlass 21 auf einer zweiten, der ersten Seite gegenüberliegenden Seite der Strömungsleitkammer 15 angeordnet ist.

Das Abgasnachbehandlungssystem 3 weist einen Abgasnachbehandlungsbehälter 23 auf, welcher seinerseits den Abgaseintritt 9, die Abgasnachbehandlungselemente 11, 13 und die Strömungsleitkammer 15 aufweist.

Bei dem hier dargestellten Ausführungsbeispiel weist der Abgasnachbehandlungsbehälter 23 eine Mehrzahl von Wechseleinschubmodulen 25 auf, wobei jeweils zwei Abgasnachbehandlungselemente in einem Wechseleinschubmodul 25 angeordnet sind, nämlich - in Längsrichtung des Wechseleinschubmoduls 25 gesehen - voneinander beabstandet, wobei die Wechseleinschubmodule 25 zwischen den Abgasnachbehandlungselementen 11, 13 jeweils eine bereichsweise randoffene Einströmkammer 27 aufweisen. Die Einströmkammer 27 ist mit der Strömungsleitkammer 15 in montiertem Zustand des Wechseleinschubmoduls 25 in Fluidverbindung. Insbesondere ist das Wechseleinschubmodul 25 derart in dem Abgasnachbehandlungsbehälter 23 angeordnet, dass die Einströmkammer 27 in der Strömungsleitkammer 15 angeordnet ist.

Der Abgasnachbehandlungsbehälter 23 weist hier Einbauaufnahmen 29 auf genau einer und nur einer Seite beziehungsweise an genau einer und nur einer Außenwandung 31 auf.

Der Abgasnachbehandlungsbehälter 23 weist außerdem zwei separate Austrittskammern 33, 35 auf, wobei Abgas, welches die ersten Abgasnachbehandlungselemente 11 durchströmt hat, in die erste Austrittskammer 33 gelangt, und wobei Abgas, welches die zweiten Abgasnachbehandlungselemente 13 durchströmt hat, in die zweite Austrittskammer 35 gelangt. Jeder Austrittskammer 33, 35 ist ein Abgasaustritt 37, 39 zugeordnet, wobei Abgas aus der ersten Austrittskammer 33 durch den ersten Abgasaustritt 37 austreten kann, wobei Abgas aus der zweiten Austrittskammer 35 durch den zweiten Abgasaustritt 39 aus dem Abgasnachbehandlungsbehälter 23 austreten kann.

Der Abgasnachbehandlungsbehälter 23 weist außerdem eine integrierte Mischkammer 41 auf, welcher hier der Abgaseintritt 9 als tangentiale Einströmöffnung zugeordnet ist, wobei das Abgasleitrohr 17 in die integrierte Mischkammer 41 mündet, wobei das Abgas durch randoffene Bohrungen des Abgasleitrohrs 17 in dieses einströmen kann, und wobei das Abgasleitrohr 17 hier als axiale Abgasauslassöffnung für die integrierte Mischkammer 41 ausgestaltet ist.

Der integrierten Mischkammer 41 sind hier zwei Dosiereinrichtungen 43 für Reduktionsmittel zugeordnet, durch welche Reduktionsmittel oder ein Reduktionsmittel-Vorläuferprodukt, insbesondere eine Harnstoff-Wasser-Lösung, in die integrierte Mischkammer 41 eindosierbar ist. Entsprechend sind die Abgasnachbehandlungselemente 11, 13 bevorzugt als SCR-Katalysatoren ausgebildet.

Insgesamt ergibt sich folgende Strömung des Abgases durch den Abgasnachbehandlungsbehälter 23: Das Abgas strömt durch den Abgaseintritt 9 in die integrierte Mischkammer 41 ein und wird dort mit Reduktionsmittel vermischt. Es strömt nun radial in das Abgasleitrohr 17 ein und durch dieses in die Strömungsleitkammer 15. Dort wird es aufgeteilt auf die Abgasnachbehandlungselemente 11, 13, wobei es insbesondere in antiparallel zueinander orientierte Strömungsrichtungen aufgeteilt wird. Aus den Abgasnachbehandlungselementen 11, 13 gelangt es in die Austrittskammern 33, 35 und von dort über die Abgasaustritte 37, 39 aus dem Abgasnachbehandlungsbehälter 23 heraus.

**Fig. 2** zeigt eine schematische Darstellung eines nicht zur Erfindung gehörenden Beispiels des Abgasnachbehandlungssystems 3. Gleiche und funktionsgleiche Elemente sind mit gleichen Bezugszeichen versehen, sodass insofern auf die vorangegangene Beschreibung verwiesen wird. Dabei weist der Abgasnachbehandlungsbehälter 23 hier eine Mehrzahl von Wechseleinschubmodulen 25 auf, wobei jedes der Wechseleinschubmodule 25 genau ein und nur ein Abgasnachbehandlungselement 11, 13 aufweist. Entsprechend sind an dem Abgasnachbehandlungsbehälter 23 Einschubaufnahmen 29 für die Wechseleinschubmodule 25 an zwei gegenüberliegenden Seiten, insbesondere an zwei gegenüberliegenden Außenwandungen 31, 31' des Abgasnachbehandlungsbehälters 23 vorgesehen. Die Wechseleinschubmodule 25, welche paarweise einander zugeordnete und insbesondere gegenüberliegend voneinander angeordnete Abgasnachbehandlungselemente 11, 13 aufweisen, werden also von entgegengesetzten Seiten in den Abgasnachbehandlungsbehälter 23 eingeschoben, wobei sie in die Strömungsleitkammer 15 münden und sich dort gegenüberliegen. Dies verbessert eine Abdichtung des Abgasnachbehandlungsbehälters 23, und es führt dazu, dass dieser kürzer bauen kann.

Das Abgasleitrohr 17 ist hier fest in den Abgasnachbehandlungsbehälter 23 integriert, wobei der Abgaseintritt 9 an dem Abgasleitrohr 17 direkt vorgesehen ist.

Das hier dargestellte Beispiel des Abgasnachbehandlungssystems 3 weist eine separate, extern und außerhalb des Abgasnachbehandlungsbehälters 23 angeordnete Mischkammer 45 auf, die stromaufwärts des Abgaseintritts 9 angeordnet und mit diesem in Fluidverbindung ist. Der Mischkammer 45 sind hier zwei Dosiereinrichtungen 43 für ein Reduktionsmittel oder ein Reduktionsmittel-Vorläuferprodukt, insbesondere für eine Harnstoff-Wasser-Lösung zugeordnet.

Die Mischkammer 45 weist eine zylindrische, oblate Form auf, wobei sie einen runden, insbesondere kreisrunden Querschnitt aufweist. Sie weist außerdem eine tangential orientierte Abgaseinlassöffnung 47 sowie eine axial orientierte, mit dem Abgaseintritt 9 verbundene Abgasauslassöffnung 49 auf. In die Mischkammer 45 tangential durch die Abgaseinlassöffnung 47 einströmendes Abgas wird so zu einer kreisförmigen oder im Wesentlichen kreisförmigen Strömung veranlasst, was günstig ist für die Vermischung und Verdampfung des Reduktionsmittels mit und in dem Abgas. Die axiale Abgasauslassöffnung 49 ist Teil eines Auslassrohrs 51, welches sich axial in die Mischkammer 45 hinein erstreckt und in dieser eine Mehrzahl randoffener Aussparungen aufweist, durch welche das Abgas in radialer Richtung in das Auslassrohr 51 einströmen und dort in axialer Richtung umgelenkt werden kann, um schließlich die Mischkammer 45 über das Auslassrohr 41 in axialer Richtung zu verlassen.

Die Mischkammer ist insbesondere aufgrund ihrer zylindrischen Ausgestaltung bevorzugt um ihre Axialrichtung drehbar, was ihren Einbau und insbesondere ihre Befestigung an einer Brennkraftmaschine deutlich erleichtert. Hierdurch kann sie insbesondere in einfacher Weise auf einen Auslass eines Abgasturboladergehäuses an der Brennkraftmaschine abgestimmt werden, ohne dass es einer Modifizierung der Anordnung des Abgasturboladergehäuses oder einer Zwischenverrohrung bedarf.

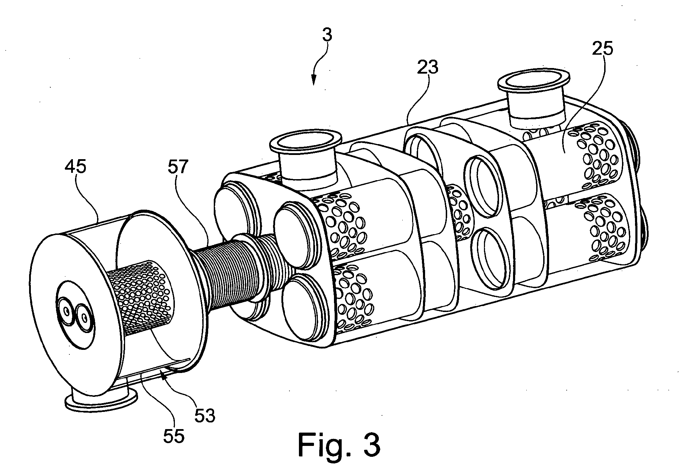

**Fig. 3** zeigt eine zweite Ansicht des nicht zur Erfindung gehörenden Beispiels des Abgasnachbehandlungssystems 3 gemäß Figur 2. Gleiche und funktionsgleiche Elemente sind mit gleichen Bezugszeichen versehen, sodass insofern auf die vorangegangene Beschreibung verwiesen wird. Dabei ist in Figur 3 dargestellt, dass die Mischkammer 45 eine Drallerzeugungseinrichtung 53 zur Erzeugung eines Dralls in der Abgasströmung aufweist, wobei die Drallerzeugungseinrichtung bevorzugt wenigstens ein Drallblech 55 aufweist. Die Erzeugung eines Dralls in der Abgasströmung hat insbesondere Vorteile in Hinblick auf eine möglichst homogene Verteilung des Reduktionsmittels und dessen effiziente Verdampfung in dem Abgasstrom.

In Figur 3 ist auch erkennbar, dass zwischen der Mischkammer 45 und dem Abgasnachbehandlungsbehälter 23 ein Faltenbalg 57 zur Kompensation von Toleranzen, Schwingungen und/oder einer thermischen Ausdehnung angeordnet sein kann.

Das Beispiel gemäß den Figuren 2 und 3 hat außerdem noch den Vorteil, dass der Abgasnachbehandlungsbehälter 23 für eine Vielzahl verschiedener Brennkraftmaschinen nur einmal ausgelegt und konstruiert werden muss, wobei er dann mit verschiedenen Mischkammern 45 kombiniert werden kann.

Umgekehrt kann alternativ oder zusätzlich die Mischkammer 45 für eine Vielzahl von Brennkraftmaschinen 1 ausgelegt und konstruiert sein, wobei diese dann mit einer Vielzahl verschiedener Abgasnachbehandlungsbehälter 23 kombiniert werden kann.

Insgesamt zeigt sich, dass mittels des hier vorgeschlagenen Abgasnachbehandlungssystems 3 und der Brennkraftmaschine 1 insbesondere ein Katalysatorvolumen ohne Druckverlust oder bei niedrigem Druckverlust deutlich vergrößert werden kann, wobei insbesondere konzeptbedingt eine vergrößerte Anströmfläche, vorzugsweise eine verdoppelte Anströmfläche, bereitgestellt wird.

## Patentansprüche

1. Abgasnachbehandlungssystem (3), mit
- einem Abgaseintritt (9),
- wenigstens zwei Abgasnachbehandlungselementen (11,13) und
- einer Strömungsleitkammer (15), wobei
der Abgaseintritt (9), die wenigstens zwei Abgasnachbehandlungselemente (11,13) und die Strömungsleitkammer (15) so relativ zueinander angeordnet und miteinander fluidverbunden sind, dass durch den Abgaseintritt (9) in die Strömungsleitkammer (15) strömendes Abgas auf die wenigstens zwei Abgasnachbehandlungselemente (11,13) aufteilbar ist, wobei das Abgas wenigstens ein erstes der wenigstens zwei Abgasnachbehandlungselemente (11,13) entlang einer ersten Strömungsrichtung durchsetzt, wobei das Abgas wenigstens ein zweites der wenigstens zwei Abgasnachbehandlungselemente (11,13) entlang einer zweiten Strömungsrichtung durchsetzt, wobei die erste Strömungsrichtung und die zweite Strömungsrichtung wenigstens schräg, vorzugsweise antiparallel zueinander orientiert sind, wobei das Abgasnachbehandlungssystem (3) einen Abgasnachbehandlungsbehälter (23) aufweist, welcher den Abgaseintritt (9), die wenigstens zwei Abgasnachbehandlungselemente (11,13) und die Strömungsleitkammer (15) aufweist, **dadurch gekennzeichnet, dass** der Abgasnachbehandlungsbehälter (23) wenigstens ein Wechseleinschubmodul (25) aufweist, welches die wenigstens zwei - in Längsrichtung des Wechseleinschubmoduls (25) gesehen - voneinander beabstandet angeordneten Abgasnachbehandlungselemente (11,13) aufweist, wobei das Wechseleinschubmodul (25) zwischen den Abgasnachbehandlungselementen (11,13) eine bereichsweise randoffene Einströmkammer (27) aufweist.

2. Abgasnachbehandlungssystem (3) nach Anspruch 1, **dadurch gekennzeichnet, dass** die wenigstens zwei Abgasnachbehandlungselemente (11,13) jeweils einen der Strömungsleitkammer (15) zugewandten Abgaseinlass (19,21) aufweisen, wobei ein erster Abgaseinlass (19) eines ersten Abgasnachbehandlungselements (11) auf einer ersten Seite der Strömungsleitkammer (15) angeordnet ist, wobei ein zweiter Abgaseinlass (21) eines zweiten Abgasnachbehandlungselements (13) auf einer zweiten, der ersten Seite gegenüberliegenden Seite der Strömungsleitkammer (15) angeordnet ist.

3. Abgasnachbehandlungssystem (3) nach einem der vorhergehenden Ansprüche, **dadurch gekennzeichnet, dass** der Abgasnachbehandlungsbehälter (23) Einschubaufnahmen (29) für Wechseleinschubmodule (25) an genau einer Außenwandung (31,31') oder an zwei gegenüberliegenden Außenwandungen (31,31') aufweist.

4. Abgasnachbehandlungssystem (3) nach einem der vorhergehenden Ansprüche, **dadurch gekennzeichnet, dass** wenigstens ein Abgasnachbehandlungselement (11,13) der wenigstens zwei Abgasnachbehandlungselemente (11,13) als SCR-Katalysator ausgebildet ist, wobei dem Abgaseintritt (9) eine Dosiereinrichtung (43) für ein Reduktionsmittel zugeordnet ist.

5. Abgasnachbehandlungssystem (3) nach einem der vorhergehenden Ansprüche, **gekennzeichnet durch** eine Mischkammer (45), die außerhalb des Abgasnachbehandlungsbehälters (23) stromaufwärts des Abgaseintritts (9) angeordnet ist, wobei die Mischkammer (45) mit dem Abgaseintritt (9) in Fluidverbindung ist, wobei
a) der Mischkammer (45) bevorzugt eine Dosiereinrichtung (43) für Reduktionsmittel zugeordnet ist, und/oder wobei
b) die Mischkammer (45) eine zylindrische Form und eine tangential orientierte Einlassöffnung (47) sowie vorzugsweise eine axiale Abgasauslassöffnung (49) aufweist, und/oder wobei
c) die Mischkammer (45) eine Drallerzeugungseinrichtung (53) zur Erzeugung eines Dralls in der die Mischkammer (45) durchsetzenden Abgasströmung aufweist.

6. Brennkraftmaschine (1), mit einem Abgasnachbehandlungssystem (3) nach einem der Ansprüche 1 bis 5.

## Claims

1. Exhaust-gas aftertreatment system (3), having
- an exhaust-gas inlet (9),
- at least two exhaust-gas aftertreatment elements (11, 13), and
- a flow guide chamber (15), wherein
the exhaust-gas inlet (9), the at least two exhaust-gas aftertreatment elements (11, 13) and the flow guide chamber (15) are arranged relative to one another and fluidically connected to one another such that exhaust gas flowing into the flow guide chamber (15) through the exhaust-gas inlet (9) can be divided up between the at least two exhaust-gas aftertreatment elements (11, 13), wherein the exhaust gas passes through at least one first of the at least two exhaust-gas aftertreatment elements (11, 13) along a first flow direction, wherein the exhaust gas passes through at least one second of the at least two exhaust-gas aftertreatment elements (11, 13) along a second flow direction, wherein the first flow direction and the second flow direction are oriented at least obliquely, preferably antiparallel, with respect to one another, wherein the exhaust-gas aftertreatment system (3) has an exhaust-gas aftertreatment container (23) which has the exhaust-gas inlet (9), the at least two exhaust-gas aftertreatment elements (11, 13) and the flow guide chamber (15), **characterized in that** the exhaust-gas aftertreatment container (23) has at least one exchangeable insert module (25) which has the at least two exhaust-gas aftertreatment elements (11, 13) which - as viewed in a longitudinal direction of the exchangeable insert module (25) - are arranged spaced apart from one another, wherein the exchangeable insert module (25) has, between the exhaust-gas aftertreatment elements (11, 13), an inflow chamber (27) which is regionally open at an edge.

2. Exhaust-gas aftertreatment system (3) according to Claim 1, **characterized in that** the at least two exhaust-gas aftertreatment elements (11, 13) have in each case one exhaust-gas inlet (19, 21) facing towards the flow guide chamber (15), wherein a first exhaust-gas inlet (19) of a first exhaust-gas aftertreatment element (11) is arranged on a first side of the flow guide chamber (15), wherein a second exhaust-gas inlet (21) of a second exhaust-gas aftertreatment element (13) is arranged on a second side, situated opposite the first side, of the flow guide chamber (15).

3. Exhaust-gas aftertreatment system (3) according to either of the preceding claims, **characterized in that** the exhaust-gas aftertreatment container (23) has insertion receptacles (29) for exchangeable insert modules (25) on exactly one outer wall (31, 31') or on two opposite outer walls (31, 31').

4. Exhaust-gas aftertreatment system (3) according to any of the preceding claims, **characterized in that** at least one exhaust-gas aftertreatment element (11, 13) of the at least two exhaust-gas aftertreatment elements (11, 13) is designed as an SCR catalytic converter, wherein the exhaust-gas inlet (9) is assigned a dosing device (43) for a reducing agent.

5. Exhaust-gas aftertreatment system (3) according to any of the preceding claims, **characterized by** a mixing chamber (45) which is arranged outside the exhaust-gas aftertreatment container (23) upstream of the exhaust-gas inlet (9), wherein the mixing chamber (45) is fluidically connected to the exhaust-gas inlet (9), wherein
a) the mixing chamber (45) is preferably assigned a dosing device (43) for reducing agent, and/or wherein
b) the mixing chamber (45) has a cylindrical shape and a tangentially oriented inlet opening (47) and preferably an axial exhaust-gas outlet opening (49), and/or wherein
c) the mixing chamber (45) has a swirl-generating device (53) for generating swirl in the exhaust-gas flow that passes through the mixing chamber (45).

6. Internal combustion engine (1), having an exhaust-gas aftertreatment system (3) according to any of Claims 1 to 5.

## Revendications

1. Système de purification de gaz d'échappement (3), avec
- une entrée de gaz d'échappement (9),
- au moins deux éléments de purification de gaz d'échappement (11, 13), et
- une chambre de guidage d'écoulement (15),
dans lequel l'entrée de gaz d'échappement (9), lesdits au moins deux éléments de purification de gaz d'échappement (11, 13) et la chambre de guidage d'écoulement (15) sont disposés les uns par rapport aux autres et sont en liaison fluidique les uns avec les autres de telle manière que des gaz d'échappement s'écoulant par l'entrée de gaz d'échappement (9) dans la chambre de guidage de gaz d'échappement (15) puissent être répartis sur lesdits au moins deux éléments de purification de gaz d'échappement (11, 13), dans lequel les gaz d'échappement traversent au moins un premier desdits au moins deux éléments de purification de gaz d'échappement (11, 13) le long d'une première direction d'écoulement, dans lequel les gaz d'échappement traversent au moins un deuxième desdits au moins deux éléments de purification de gaz d'échappement (11, 13) le long d'une deuxième direction d'écoulement, dans lequel la première direction d'écoulement et la deuxième direction d'écoulement sont orientées au moins en oblique, de préférence de façon antiparallèle l'une à l'autre, dans lequel le système de purification de gaz d'échappement (3) présente un récipient de purification de gaz d'échappement (23), qui présente l'entrée de gaz d'échappement (9), lesdits au moins deux éléments de purification de gaz d'échappement (11, 13) et la chambre de guidage d'écoulement (15), **caractérisé en ce que** le récipient de purification de gaz d'échappement (23) présente au moins un module d'insertion interchangeable (25), qui présente lesdits au moins deux éléments de purification de gaz d'échappement (11, 13) disposés à distance l'un de l'autre - vus dans la direction longitudinale du module d'insertion interchangeable (25) -, dans lequel le module d'insertion interchangeable (25) présente entre les éléments de purification de gaz d'échappement (11, 13) une chambre d'entrée (27) localement à bord ouvert.

2. Système de purification de gaz d'échappement (3) selon la revendication 1, **caractérisé en ce que** lesdits au moins deux éléments de purification de gaz d'échappement (11, 13) présentent respectivement une entrée de gaz d'échappement (19, 21) tournée vers la chambre de guidage d'écoulement (15), dans lequel une première entrée de gaz d'échappement (19) d'un premier élément de purification de gaz d'échappement (11) est disposée sur un premier côté de la chambre de guidage d'écoulement (15), dans lequel une deuxième entrée de gaz d'échappement (21) d'un deuxième élément de purification de gaz d'échappement (13) est disposée sur un deuxième côté, opposé au premier côté, de la chambre de guidage d'écoulement (15).

3. Système de purification de gaz d'échappement (3) selon l'une quelconque des revendications précédentes, **caractérisé en ce que** le récipient de purification de gaz d'échappement (23) présente des logements d'insertion (29) pour des modules d'insertion interchangeables (25) sur exactement une paroi extérieure (31, 31') ou sur deux parois extérieures opposées (31, 31').

4. Système de purification de gaz d'échappement (3) selon l'une quelconque des revendications précédentes, **caractérisé en ce qu'**au moins un élément de purification de gaz d'échappement (11, 13) desdits au moins deux éléments de purification de gaz d'échappement (11, 13) est formé par un catalyseur SCR, dans lequel un dispositif de dosage (43) pour un agent réducteur est associé à l'entrée de gaz d'échappement (9) .

5. Système de purification de gaz d'échappement (3) selon l'une quelconque des revendications précédentes, **caractérisé par** une chambre de mélange (45), qui est disposée à l'extérieur du récipient de purification de gaz d'échappement (23) en amont de l'entrée de gaz d'échappement (9), dans lequel la chambre de mélange (45) est en liaison fluidique avec l'entrée de gaz d'échappement (9), dans lequel
a) un dispositif de dosage (43) pour un agent réducteur est de préférence associé à la chambre de mélange (45), et/ou dans lequel
b) la chambre de mélange (45) présente une forme cylindrique et une ouverture d'entrée (47) orientée tangentiellement ainsi que de préférence une ouverture de sortie de gaz d'échappement axiale (49), et/ou dans lequel
c) la chambre de mélange (45) présente un dispositif de production de tourbillons (53) pour produire un tourbillon dans l'écoulement de gaz d'échappement traversant la chambre de mélange (45).

6. Moteur à combustion interne (1), avec un système de purification de gaz d'échappement (3) selon l'une quelconque des revendications 1 à 5.
